# EUROPEAN PATENT APPLICATION

(11) **EP 2 392 546 A1**
(43) Date of publication of application: **07.12.2011**
(21) Application number: 10165108.1
(22) Date of filing: 07.06.2010
(51) Int. Cl.: C01B 31/02

(54) **Solutions of carbon nanohorns, method for making same and uses thereof**

(71) Applicant: Centre National de la Recherche Scientifique (CNRS), 75794 Paris Cedex 16 (FR)
(72) Inventor: Penicaud, Alain, 33000 Bordeaux (FR); Voiry, Damien, 37300 Joue-les-Tours (FR); Tagmatarchis, Nikos, 15124 Athens (GR); Pagona, Georgia, 15121 Attica (GR)
(74) Representative: Novagraaf Technologies

(57) **Abstract**

The present invention relates to a method for solubilizing carbon nanohorns and applications thereof, including the manufacture of composites, hydrogen storage, catalyst supports and drug delivery.

In certain embodiments, there is provided a method for solubilizing carbon nanohorns, said method comprising the following steps carried out under inert atmosphere:
a) Reduction of pristine carbon nanohorns by an alkali metal to lead to a carbon nanohorn alkali salt; and
b) Exposure of said carbon nanohorn alkali salt to a polar aprotic solvent to lead to a solution of reduced carbon nanohorns.

In certain other embodiments, the present invention relates more particularly to solutions of carbon nanohorns, and individual carbon nanohorns obtainable by said method, as well as uses of such individual carbon nanohorns and solutions of carbon nanohorns.

## Description

### Description

### Technical field

The present invention relates to a method for solubilizing carbon nanohorns and applications thereof, including the manufacture of composites, hydrogen storage, catalyst supports and drug delivery.

The present invention more particularly relates to solutions of carbon nanohorns and individualized carbon nanohorns obtained through said method, as well as uses of such solutions of carbon nanohorns and individualized carbon nanohorns.

Being able to obtain carbon nanohorns in the form of solutions is of great interest from an industrial application point of view, more particularly with respect to processing these carbon nanohorn solutions for a given application. Specifically, such solutions can readily be used to deposit carbon nanohorns on a given substrate, to form carbon nanohorn films or to manufacture, carbon nanohorn-containing composites by impregnation. Such solutions also allow for further functionalization and open up the way to preparing carbon nanohorn-based catalyst supports, carbon nanohorn-based drug delivery vehicles, and carbon nanohorn-based electrodes for gas storage, for example for hydrogen storage.

In the description that follows, the references between square brackets ([]) refer to the list of references given after the examples.

### Background of the invention

Carbon is known as having four unique crystalline structures or structure families: diamond, graphite, fullerenes and carbon nanotubes.

The tubular structure of carbon nanotubes confers unique mechanical, electric or chemical properties to them. For that reason, carbon nanotubes are commonly used in composite materials (Shaffer, M.S. P., Windle, A. H., "Fabrication and Characterization of Carbon Nanotube/poly(vinyl alcohol) Composites", Adv. Mater., 11, pp 937-941 (1999) [ref 1]), hydrogen fuel cells (Ye, Y., Ahn, C. C., Witham, C., Fultz, B., Liu, J., Rinzler, A. G., Colbert, D., Smith, K. A., Smalley, R. E., "Hydrogen Absorption And Cohesive Energy Of Single-Walled Carbon Nanotubes", App. Phys. Lett., 74, pp 307-2309 (1999) [ref 2]; Liu, C., Fan, Y. Y., Liu, M., Cong, H. T., Cheng, H. M., Dresselhaus. M. S., "Hydrogen Storage In Single-Walled Carbon Nanotubes At Room Temperature", Science, 286, pp 1127-1129 (1999) [ref 3]; Kong, J., Chapline, M. G., Dai, H., "Functionalized Carbon Nanotubes For Molecular Hydrogen Sensors", Adv. Mater. 13, 1384-1386 (2001) [ref 4], supercapacitors (Aldissi, M.; Schmitz, B.; Lazaro, E.; Bhamidipati, M.; Dixon, B., "Conducting Polymers in Ultracapacitor Applications", 56th Annu. Tech. Conf.-Soc. Plast. Eng., (Vol.2), pp 1197-1201 (1998) [ref 5]; An, K. H.; Kim, W. S.; Park, Y.S.; Moon, J.-M.; Bae, D. J.; Lim, S. C.; Lee, Y. S.; Lee, Y. H. "Electrochemical Properties of High-Power Supercapacitors Using Single-Walled Carbon Nanotube Electrodes", Adv. Funct. Mater. 11, pp 387-392 (2001) [ref 6], catalysis (Yu, R., Chen, L., Liu, Q., Lin, J., Tan, K. -L., Ng, S. C., Chan, H. S. O., Xu, G.-Q., Hor, T. S. A. "Platinum Deposition On Carbon Nanotubes Via Chemical Modification", Chem, Mater. 10, pp 718-722 (1998) [ref 7]; (Planeix, J. M.; Coustel, N.; Coq, B.; Brotons, V.; Kumbhar, P. S.; Dutartre, R.; Geneste, P.; Bernier, P.; Ajayan, P. M., "Application Of Carbon Nanotubes As Supports_in Heterogeneous Catalysis", J. Am, Chem, Soc. 116, pp 7935-7936 (1994) [ref 8]) and nanometric-size electronic components or systems (Tans, S. J., Verschueren, A. R. M., Dekker, C., "Room-Temperature Transitor Based On A Single Carbon Nanotube", Nature 393, pp 49-52 (1998) [ref 9]; Bachtold, A.; Hadley, P.; Nakanishi, T.; Dekker, C., "Logic Circuits With Carbon Nanotube Transistors". Science 294 pp, 1317-1320 (2001) [ref 10]).

However, the relatively high cost of carbon nanotubes as well as the presence of impurities such as residual metal nanoparticles and/or amorphous carbon have significantly hampered their use on an industrial scale.

Thus, the scientific community developed an interest for an alternative carbon nanomaterial that has comparable properties but that is more easily accessible, produced in the absence of metal catalyst, and at lower costs: carbon nanohorns.

Nanohorns were first described in 1999 as dahlia shaped aggregates of ca 100 nm diameter, made of a very large number of carbon nanohorns (Iijima et al., Chem. Phys. Lett., 309 (1999) 165-170 [ref 11]). The structure of a single-wall carbon nanohorn (SWNH) is unique and is very different from that of a single-wall carbon nanotube. The diameter of an individual SWNH ranges from 2 to 10 nm, and the length is 10 to 70 nm. Azami et al. reported that about 2000 of individual SWNH assemble to form a spherical aggregate with a diameter of about 100 nm. (Azami et al., J. Phys. Chem., (2008), 112, 1330-1334[ref 12]). Azami et al. observed that the spherical aggregates were robust and could not be separated into individual SWNH.

There is currently no industrial provider for carbon nanohorns yet. However, the process (CO₂ laser ablation at room temperature) is quite cheap compared to that of nanotubes, since it uses no metal catalyst and is performed at room temperature.

A large-scale production process has been reported, that allows the preparation of carbon nanohorns with a capacity of 1 kg/day (Azami et al., J. Phys. Chem., (2008), 112, 1330-1334[ref 12]). This translates into 0,4 ton/year. Therefore, scaling-up the process to produce carbon nanohorns on an industrial scale appears to be quite within reach.

Carbon nanohorns have recently prompted interest in research because of its various application potentials.

However, at present, no unfunctionalized nanohorn solubilizing method exist, and nanohorn solutions as such have thus far remained elusive. As a result, the scope of potential applications for carbon nanohorns has remained limited. Access to solutions of carbon nanohorns would open up a wider range of possibilities in terms of possible industrial applications, including applications involving solution phase chemistry.

One attempt to solubilize carbon nanohorns has been reported (Zhang et al., J. Phys. Chem. C, 113, 11184-11186 (2009) [ref 13]. This publication describes the individualization of carbon nanohorns via a highly involved oxidation process. Specifically, the process involved air oxidation at high temperature, followed by sonication-assisted dispersion and ultracentrifugation in a density gradient medium, yielding minute quantities of individual carbon nanohorns.

However, major drawbacks of this method include:
- the drastic oxidation conditions
- the oxidation of carbon nanohorns (in aggregated as well as in individualized form)
- the tedious process of separating individualized carbon nanohorns from the various oxidized specied formed in the process
- the very poor yield.

Thus, there exists a real need for methods for solubilizing carbon nanohorns that remedy these problems, drawbacks and obstacles known in the art, more particularly a method allowing to obtain carbon nanohorns solution that can readily be used for processing carbon nanohorns for a given application.

### Detailed description of certain exemplary embodiments of the invention

The present invention specifically aims at meeting such need by providing a method for solubilizing carbon nanohorns, said method comprising the following steps carried out under inert atmosphere:
a) Reduction of pristine carbon nanohorns by an alkali metal to lead to a carbon nanohorn alkali salt; and
b) Exposure of said carbon nanohorn alkali salt to a polar aprotic solvent to lead to a solution of reduced carbon nanohorns.

According to the invention, the alkali metal can be any alkali metal allowing the implementation of the present invention. It can be chosen for example in the group comprising lithium, sodium, potassium, rubidium and cesium. More particularly, the alkali metal can be lithium, sodium or potassium. In certain exemplary embodiments, the alkali metal is potassium.

"Reduction by an alkali metal" as used herein refers to a reduction in which an alkali metal is involved. Thus, the reduction can be carried out directly in the presence of an alkali metal, for example in vapour phase. Reduction methods in the presence of an alkali metal are well known in the art. The persons skilled in the art will know how to identify the appropriate experimental conditions for implementing a reduction method in the presence of an alkali metal, for example in vapour phase.

In another embodiment, the reduction is carried out in the presence of an alkali metal salt obtained from an alkali metal. For example, the reduction can be carried out in the presence of a polyaryl alkali salt having the formula A⁺B⁻, wherein A⁺ represents a cation of an alkali ion and B⁻represents an anion of a polyaromatic compound. Such polyaryl alkali salts and methods for preparing them are described for example in (C. Stein, J. Poulenard, L. Bonnetain, J. Golé, C.R. Acad. Sci. Paris 260, 4503 (1965) [ref 14]; "Synthesis of graphite intercalation compounds", A. Herold in Chemical physics of intercalation, A.P. Legrand and S. Flandrois, Eds, NATO ASI Series, series B, Vol. 172, pp. 3-45 (1987) [ref 15] ; F. Béguin and R. Setton New ternary lamellar compounds of graphite, Carbon 13, 293-295 (1975) [ref 16]; WO 2005/073127 [ref 17] and WO 2009/087287 [ref 18].

According to one embodiment, the polyaromatic compound is selected from naphthalene, benzophenone, fluorenone, benzoquinone or anthraquinone. In certain embodiments, the polyaromatic compound is naphthalene. In certain embodiments, the polyaryl alkali salt is a polyaryl potassium salt (i.e., a salt of the formula A⁺B⁻, wherein A+ represents K⁺). Advantageously, the polyaryl alkali salt of the formula A⁺B⁻ is a naphthalene potassium salt (Naph⁻K⁺) .

"Pristine carbon nanohorns" as used herein refers to spherical aggregates of carbon nanohorns as conventionally understood in the art. The "carbon nanohorns" in the present invention are generally intended to include a "dahlia-like" aggregate of a plurality of horn-shaped bodies with their closed portions oriented outward, and an assembly of a plural groups each composed of a plurality of horn-shaped bodies.

The carbon nanohorns as defined above may also be referred to herein as "CNHs" (as a plural) for brevity.

CNHs generally have a tubular structure like a carbon nanotube, formed by a cylindrically rounded graphite sheet and one end of the carbon nanohorn is formed in a conical shape. Usually CNHs are aggregated in a form so that the conical portions are projected like horns while the tubular parts are located in the center, held together by Van der Waals force and/or covalent bonds. Pristine CNHs to be used in the present invention may be those which are obtained by the conventional methods.

For example, pristine carbon nanohorns include carbon nanohorns assembled in spherical-type aggregates, such as those that are typically obtained through the conventional laser ablation methods of irradiating the carbon substance of a raw material with a laser beam in an inert gas atmosphere (See for example, Iijima et al., Chem. Phys. Lett., 309 (1999) 165-170 [ref 11]; and Azami et al., J. Phys. Chem., (2008), 112, 1330-1334[ref 12]). The expression "pristine carbon nanohorns" as used herein refers to carbon nanohorns assembled in spherical-type aggregates, in general, regardless of the synthetic method used. For example, carbon nanohorns described in US patent 7,501,024 [ref 19] are included.

Another term that may be used interchangeably with "pristine carbon nanohorns" is "carbon nanohorn aggregate". Such aggregates may have a dahlia shape, a bud shape, a seed shape, or an intermediate shape among those shapes.

In general, each nanohorn in the carbon nanohorn aggregate is formed of at least one tube part and one conical part capping one end of the tube part. Nanohorns may have more than one tube parts (i.e., they may be branched). For example, they may have three tube parts (tripods). These have been reported for example in Zhang et al., J. Phys. Chem. C, 113, 11184-11186 (2009) [ref 13].

Further, the carbon nanohorns (CNHs) may contain a permissive range of functional group or groups bonded thereto.

"Reduced carbon nanohorns" as used herein refer to individual negatively charged carbon nanohorns. The negative charge is delocalized onto the carbon atoms forming the carbon nanohorns.

In certain exemplary embodiments, the reduction step a) is carried out in the presence of a solvent. For example, the solvent can be a nucleophilic solvent. For example, the nucleophilic solvent can be an aprotic solvent whose structure contains at least one oxygen atom, for instance THF.

In certain embodiments, the carbon nanohorn alkali salt is in the form of a binary compound of formula MCₓ where M represents a positive counter-ion of an alkali metal (M⁺), and x represents an integer between 6 and 200. More particularly, the alkali metal can be potassium. For example, the carbon nanohorn alkali salt can be a binary compound of formula KC₈.

In certain embodiments, the carbon nanohorn alkali salt is in the form of a ternary compound having the structure M(Solv)_{y}Cₓ in which M is an alkali metal ion, Solv is a nucleophilic solvent whose structure contains at least one oxygen atom, x represents an integer between 6 and 200 and y represents an integer between 0 and 4. For example, the alkali metal may be potassium, the solvent may be THF and the carbon nanohorn alkali salt may be a ternary compound having the structure K(THF)_{y}Cₓ where x represents an integer between 6 and 200, and y represents an integer between 0 and 4. In certain embodiments, the carbon nanohorn alkali salt is a ternary compound having the structure K(THF)C₂₄ or K(THF)₂C₂₄.

In certain embodiments, the reduction step is selected from the group comprising reduction by an alkali metal in vapour phase followed by exposure to an aprotic solvent, electrochemical reduction and reduction by a polyaryl alkali salt in an aprotic solvent. For example, the solvent can be an aromatic solvent such as benzene or toluene. The solvent can be an aprotic solvent whose structure contains at least one oxygen atom, such as THF.

In certain embodiments, the reduction step a) comprises the addition of a polyaryl alkali salt having the formula A⁺B⁻ to pristine carbon nanohorns under inert atmosphere, wherein:
A⁺ represents a cation of an alkali ion, and
B⁻ represents an anion of a polyaromatic compound.

According to one embodiment, the polyaromatic compound is selected from the group comprising naphthalene, benzophenone, fluorenone, benzoquinone and anthraquinone.

In certain embodiments, the polar aprotic solvent used in the mixing step b) has a dielectric constant between 25 and 200.

In certain embodiments, the polar aprotic solvent used in the mixing step b) has a surface energy that matches that of graphitic surfaces.

For example, the polar aprotic solvent used in the step b) may be dimethylsulfoxide (DMSO), N-methyl-2-pyrrolidinonne (NMP), dimethyl formamide (DMF), acetone, acetonitrile, benzonitrile, 1,2-dichloro benzene, chloro benzene, sulfolane, cyclopentanone, cyclohexanone, N-formyl piperidine (NFP), vinyl pyrrolidone (NVP), 1,3-dimethyl-2-imidazolidinone (DMEU), bromobenzene or benzyl benzoate.

In certain exemplary embodiments, the polar aprotic solvent used in the step b) may be dimethylsulfoxide (DMSO), N-methyl-2-pyrrolidinonne (NMP), dimethyl formamide (DMF), acetone, acetonitrile, benzonitrile, 1,2-dichloro benzene or chloro benzene.

In certain embodiments, the mixing step b) is carried out at a temperature of -22 to 202°C. For example, the mixing step b) is carried out at a temperature of 20 to 25°C.

Generally speaking, the method of the invention, more particularly the mixing step b) can be implemented with or without stirring. When a stirring system is used, it may be a mechanical or magnetic stirring system or sonication. In certain embodiments, the method is carried out with a mechanical stirring. In another embodiment, the method is carried with a magnetic stirring.

It should be noted that, although the method of the invention can be implemented with a stirring system comprising sonication, the latter is not necessary. In fact, a remarkable advantage of the present method is that it is based on a mild dissolution method, starting from neutral pristine carbon nanohorns, which precisely allows avoiding the use of sonication. Thus, the method of the invention allows obtaining intact individualized carbon nanohorns.

According to a particular embodiment of the method of the present invention, a filtration step (a1) can be performed after step (a) and prior to step (b). For example, when step (a) of the method involves a reduction in the presence of an alkali metal salt obtained from an alkali metal, filtration can allow separating the liquid phase (for example a solution of K⁺Napht⁻ in THF) from the solid phase comprising the carbon nanohorn alkali salt and possibly from any pristine carbon nanohorns that did not get reduced. The resulting carbon nanohorn alkali salt can be rinsed one or more times with an appropriate solvent. For example, after the filtration step (a1), the carbon nanohorn alkali salt can be rinsed with the same solvent as the one used for the step (a), for example THF. The carbon nanohorn alkali salt so rinsed may then be dried prior to step (b).

In certain embodiments, the method further comprises a centrifugation step (b1), which allows separating any non dissolved fraction of the reduced carbon nanohorn solution after step (b). The person skilled in the art will know how to determine appropriate centrifugation conditions to obtain a clear reduced carbon nanohorn solution, i.e., not including detectable aggregates. For example, centrifugation can be carried out between 100 and 200 000 g for 0.1 to 24 hours. In certain embodiments, the centrifugation step is carried out at 2 800 g for 1 hour.

According to one embodiment, the presence of aggregates in the solution during centrifugation is checked with the naked eye. Thus, a sample of the solution can be taken at various intervals during centrifugation to determine whether the latter will allow obtaining a clear solution (i.e., without aggregates visible with the naked eye). The naked eye examination allows detecting possible aggregates with a minimal size of the order of one tenth of a millimetre (100 microns).

According to one embodiment, the presence of aggregates in the solution during centrifugation is checked using an optical microscope. Thus, a sample of the solution can be taken at various intervals during the centrifugation step to determine when the latter will have allowed obtaining a clear solution (i.e., without any aggregates visible with an optical microscope). The optical microscope examination allows detecting possible aggregates having a minimal size of the order of one micron. In certain embodiments, a solution sample can be analysed with an optical microscope having a magnification of 20 to 100.

Method steps a) and b) are always carried out under inert atmosphere. "Inert atmosphere" as used herein refers to a gas or a gaseous mixture which does not favour re-oxidation of the reduced carbon nanohorns into neutral carbon nanohorns. For example, the method is carried out under an oxygen gas-free gas atmosphere. For particularly, the method can be carried out under an argon or nitrogen gas atmosphere.

Thus, the present invention also provides individualized carbon nanohorns obtainable by a method according to the invention.

The present invention also provides solutions of reduced carbon nanohorns obtainable by a method according to the invention.

In certain embodiments, the method may further comprise a step during which individualized carbon nanohorns are functionalised with one or more functional group(s). The attachment of said functional groups on the carbon nanohorns can be carried out by any appropriate method of organic chemistry known to the person skilled in the art. Methods which can be used to attach or form the functional groups on the carbon nanohorns are described for example in documents such as Tagmatarchis et al., Small, 2(4), (2006), 490-494 [ref 20].

Briefly, the negatively charged carbon nanohorns obtained in step b) of the inventive process may subsequently be made to react (as a nucleophile) with an electrophile to effect functionalization of the carbon nanohorn surface. Any electrophilic addition reaction involving a negatively charged substrate may be used, where the reduced CNHs will play the role of the substrate.

The practitioner has a well-established literature of organic chemistry to draw upon, in combination with the information contained herein, for guidance on synthetic strategies, protecting groups, and other materials and methods useful for the functionalization of individualized carbon nanohorns according to this invention.

Moreover, the practitioner is directed to the specific guidance and examples provided in this document relating to various exemplary functionalization methods.

Although the attachment of certain exemplary functional groups are detailed herein, it will be appreciated that the present invention is not intended to be limited to these functional groups; rather, a variety of additional functional groups and methods for their attachment to the carbon nanohorn surface can be readily identified by a person skilled in the relevant art.

For example, the negatively charged carbon nanohorns may be reacted with a compound R-X, wherein X represents a leaving group, and R represents a C₁₋₁₀alkyl, C₂₋₁₀alkenyl, C₂-₁₀alkynyl, C₁₋₁₀alkyl, C₁₋₁₀alkylcarbonyl, C₆₋₁₀arylcarbonyl, C₁-₁₀heteroarylcarbonyl moiety, each of the foregoing moieties being optionally substituted.

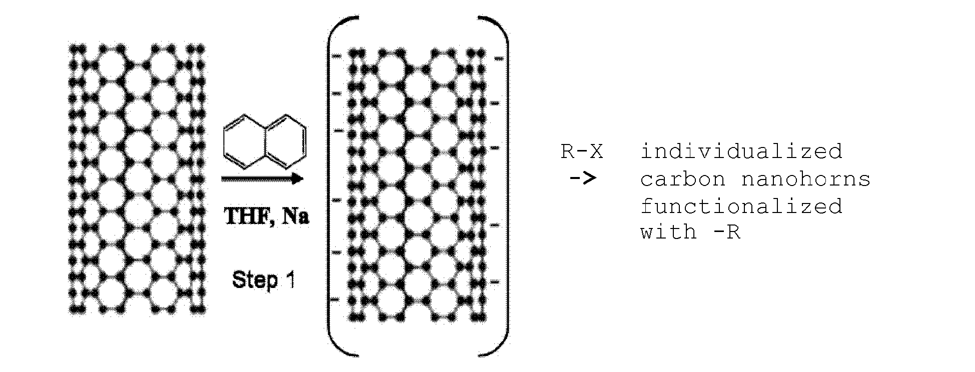

In certain embodiments, X may represent F, Cl, Br or I or tosylate.

In certain embodiments, R may represent a C₁₋₆alkyl moiety (for example methyl), an arylalkyl moiety (for example benzyl), or an acyl moiety.

In certain other embodiments, R-X together represent a monomer, which upon reaction with the negatively charged carbon nanohorns, attaches to the surface of the nanohorn and polymerizes, thereby leading to a polymer grafted onto the surface of the nanohorn. In certain exemplary embodiments, R-X together represents methyl methacrylate monomer.

In general, the term "substituted" whether preceded by the term "optionally" or not refer to the replacement of hydrogen radicals in a given structure with the radical of a specified substituent. When more than one position in any given structure may be substituted with more than one substituent selected from a specified group, the substituent may be either the same or different at every position. As used herein, the term "substituted" is contemplated to include all permissible substituents of organic compounds. In a broad aspect, the permissible substituents include acyclic and cyclic, branched and unbranched, carbocyclic and heterocyclic, aromatic and non-aromatic, carbon and heteroatom substituents of organic compounds. For purposes of this invention, heteroatoms such as nitrogen may have hydrogen substituents and/or any permissible substituents of organic compounds described herein which satisfy the valencies of the heteroatoms. Furthermore, this invention is not intended to be limited in any manner by the permissible substituents of organic compounds. Examples of substituents include, but are not limited to aliphatic; heteroaliphatic; alicyclic; heteroalicyclic; aromatic, heteroaromatic; aryl; heteroaryl; alkylaryl; alkylheteroaryl; alkoxy; aryloxy; heteroalkoxy; heteroaryloxy; alkylthio; arylthio; heteroalkylthio; heteroarylthio; F; Cl; Br; I; -NO₂; -CN; -CF₃; -CH₂CF₃; - CHCl₂; -CH₂OH; -CH₂CH₂OH; -CH₂NH₂; -CH₂SO₂CH₃; - or -GR^{G1} wherein G is -O-, -S-, -NR^{G2}-, -C(=O)-, -S(=O)-, -C(=O)O-, - C(=O)NR^{G2}-, -OC(=O)-, or -NR^{G2}C (=O) -, wherein each occurrence of R^{G1} and R^{G2} independently represents hydrogen, halogen, or an optionally substituted aliphatic, heteroaliphatic, alicyclic, heteroalicyclic, aromatic, heteroaromatic, aryl, heteroaryl, alkylaryl, or alkylheteroaryl moiety. Additional examples of generally applicable substituents are illustrated by the specific embodiments shown in the Examples that are described herein.

The term "aliphatic", as used herein, includes both saturated and unsaturated, straight chain (i.e., unbranched) or branched aliphatic hydrocarbons, which are optionally substituted with one or more functional groups. As will be appreciated by one of ordinary skill in the art, "aliphatic" is intended herein to include alkyl, alkenyl, alkynyl moieties. Thus, as used herein, the term "alkyl" includes straight and branched alkyl groups. An analogous convention applies to other generic terms such as "alkenyl", "alkynyl" and the like. In certain embodiments, as used herein, "lower alkyl" is used to indicate those alkyl groups (substituted, unsubstituted, branched or unbranched) having about 1-6 carbon atoms.

In certain embodiments, the alkyl, alkenyl and alkynyl groups referred to herein contain about 1-20 aliphatic carbon atoms. In certain other embodiments, the alkyl, alkenyl, and alkynyl groups referred to herein contain about 1-10 aliphatic carbon atoms. In yet other embodiments, the alkyl, alkenyl, and alkynyl groups referred to herein contain about 1-8 aliphatic carbon atoms. In still other embodiments, the alkyl, alkenyl, and alkynyl groups referred to herein contain about 1-6 aliphatic carbon atoms. In yet other embodiments, the alkyl, alkenyl, and alkynyl groups referred to herein contain about 1-4 carbon atoms. Illustrative aliphatic groups thus include, for example, methyl, ethyl, n-propyl, isopropyl, allyl, n-butyl, sec-butyl, isobutyl, tert-butyl, n-pentyl, sec-pentyl, isopentyl, tert-pentyl, n-hexyl, sec-hexyl, moieties and the like. Alkenyl groups include, for example, ethenyl, propenyl, butenyl, 1-methyl-2-buten-1-yl, and the like. Representative alkynyl groups include, ethynyl, 2-propynyl (propargyl), 1-propynyl and the like.

The term "alicyclic", as used herein, refers to compounds which combine the properties of aliphatic and cyclic compounds and include cyclic, or polycyclic aliphatic hydrocarbons and bridged cycloalkyl compounds. As will be appreciated by one of ordinary skill in the art, "alicyclic" is intended herein to include, cycloalkyl, cycloalkenyl, and cycloalkynyl moieties. Illustrative alicyclic groups thus include, for example, cyclopropyl, -CH₂-cyclopropyl, cyclobutyl, -CH₂-cyclobutyl, cyclopentyl, -CH₂-cyclopentyl-n, cyclohexyl, -CH₂-cyclohexyl, cyclohexenylethyl, cyclohexanylethyl, norborbyl moieties and the like.

The term "cycloalkyl", as used herein, refers specifically to cyclic alkyl groups having three to seven, preferably three to ten carbon atoms. Suitable cycloalkyls include, cyclopropyl, cyclobutyl, cyclopentyl, cyclohexyl, cycloheptyl and the like. An analogous convention applies to other generic terms such as "cycloalkenyl", "cycloalkynyl" and the like.

The term "heteroaliphatic", as used herein, refers to aliphatic moieties in which one or more carbon atoms in the main chain have been substituted with a heteroatom. Thus, a heteroaliphatic group refers to an aliphatic chain which contains one or more oxygen, sulfur, nitrogen, phosphorus or silicon atoms, i.e., in place of carbon atoms. Heteroaliphatic moieties may be branched or linear unbranched.

The terms "heteroalkyl" as used herein refers to an alkyl group, as previously defined, attached to the parent molecular moiety through an oxygen, sulfur or nitrogen atom. An analogous convention applies to other generic terms such as "heteroalkenyl", "heteroalkynyl" and the like.

The term "heteroalicyclic", "heterocycloalkyl" or "heterocyclic", as used herein, refers to compounds which combine the properties of heteroaliphatic and cyclic compounds and include saturated and unsaturated mono- or polycyclic heterocycles such as morpholino, pyrrolidinyl, furanyl, thiofuranyl, pyrrolyl etc. In certain embodiments, the term "heterocyclic" refers to a non-aromatic 5-, 6- or 7- membered ring or a polycyclic group, including, a bi- or tri-cyclic group comprising fused six-membered rings having between one and three heteroatoms independently selected from oxygen, sulfur and nitrogen, wherein (i) each 5-membered ring has 0 to 2 double bonds and each 6-membered ring has 0 to 2 double bonds, (ii) the nitrogen and sulfur heteroatoms may optionally be oxidized, (iii) the nitrogen heteroatom may optionally be quaternized, and (iv) any of the above heterocyclic rings may be fused to an aryl or heteroaryl ring. Representative heterocycles include, pyrrolidinyl, pyrazolinyl, pyrazolidinyl, imidazolinyl, imidazolidinyl, piperidinyl, piperazinyl, oxazolidinyl, isoxazolidinyl, morpholinyl, thiazolidinyl, isothiazolidinyl, and tetrahydrofuryl.

Additionally, it will be appreciated that any of the alicyclic or heteroalicyclic moieties described above and herein may comprise an aryl or heteroaryl moiety fused thereto.

In general, the term "aromatic moiety", as used herein, refers to stable substituted or unsubstituted unsaturated mono- or polycyclic hydrocarbon moieties having preferably 3-14 carbon atoms, comprising at least one ring satisfying the Huckel rule for aromaticity. Examples of aromatic moieties include, phenyl, indanyl, indenyl, naphthyl, phenanthryl and anthracyl.

In general, the term "heteroaromatic moiety", as used herein, refers to stable substituted or unsubstituted unsaturated mono-heterocyclic or polyheterocyclic moieties having preferably 3-14 carbon atoms, comprising at least one ring satisfying the Huckel rule for aromaticity. Examples of heteroaromatic moieties include, pyridyl, quinolinyl, dihydroquinolinyl, isoquinolinyl, quinazolinyl, dihydroquinazolyl, and tetrahydroquinazolyl.

In general, the term "aryl" refers to aromatic moieties, as described above. In certain embodiments of the present invention, "aryl" refers to a mono- or bicyclic carbocyclic ring system having one or two rings satisfying the Huckel rule for aromaticity, including, but not limited to, phenyl, naphthyl, tetrahydronaphthyl, indanyl, indenyl and the like. Similarly, the term "heteroaryl" refers to heteroaromatic moieties, as described above. In certain embodiments of the present invention, the term "heteroaryl", as used herein, refers to a cyclic unsaturated radical having from about five to about ten ring atoms of which one ring atom is selected from S, O and N; zero, one or two ring atoms are additional heteroatoms independently selected from S, O and N; and the remaining ring atoms are carbon, the radical being joined to the rest of the molecule via any of the ring atoms, such as, for example, pyridyl, pyrazinyl, pyrimidinyl, pyrrolyl, pyrazolyl, imidazolyl, thiazolyl, oxazolyl, isooxazolyl, thiadiazolyl, oxadiazolyl, thiophenyl, furanyl, quinolinyl, isoquinolinyl, and the like.

In another aspect, the present invention also relates to the use of individualized carbon nanohorns or reduced carbon nanohorn solutions obtainable by the method of the invention, for applications in drug delivery, catalysis or gas storage.

### Drug delivery

The development of new and efficient drug delivery systems is of fundamental importance to improve the pharmacological profiles of many classes of therapeutic molecules. Many different types of drug delivery systems are currently available. Within the family of nanomaterials, carbon nanotubes (CNT) have emerged as a new alternative and efficient tool for transporting therapeutic molecules.

Thus, the wealth of research on carbon nanotubes has shown that they are very efficient at crossing the cell membranes due to their hydrophobic surfaces. As such, they are potential vectors for drug delivery. However, one drawback of carbon nanotubes in that area is the problem of residual metals used in their synthesis. In addition, carbon nanotubes have to be cut and functionalized to be suitable for biological functions involved in drug delivery.

Carbon nanohorns are already shortened objects, free from metal impurities, the extremity of which (i.e., the most reactive part of the structure) is a sizable part of the object rather than a defect as opposed to carbon nanotubes. Hence, carbon nanohorns do not need to be shortened by aggressive acidic treatments, and their functionalization is much easier than carbon nanotubes'.

On that point, the research findings relative to carbon nanotubes are directly transposable to carbon nanohorns, and the practitioner may look to these for guidance as to how select the bioactive material and a means of incorporation onto and/or into the individualized carbon nanohorns of the invention, depending on the biomedical use involved.

In principle, a wide range of different molecules could be attached to carbon nanohorns, raising the possibility of an easily customised way of ferrying molecules into cells. Carbon nanohorns can be functionalised with bioactive peptides, proteins, nucleic acids and drugs, and used to deliver their cargos to cells and organs. Because carbon nanohorns display low toxicity and are not immunogenic, such systems hold great potential in the field of nanobiotechnology and nanomedicine.

Thus, in another aspect, reduced carbon nanohorn solutions or individualized carbon nanohorns obtainable by the method of the invention may be used to prepare a nanohorn drug delivery system.

The mechanism used to deliver the bioactive compound depends on the specific application. For example, a bioactive compound can be delivered to a required part or parts of a human or animal body via an intravenous, intradermal, subcutaneous, oral (e.g., inhalation), transdermal (i.e., topical), or transmucosal route.

In one embodiment of the present invention a bioactive compound is attached to an outside surface of individualized carbon nanohorns according to the invention. For example, the bioactive compound can be attached by a covalent bond. If the bioactive compound is to be released upon delivery, the bioactive compound can be attached by a chemically labile bond, such as an ester linkage. The release of the bioactive compound occurs upon hydrolization of the bond.

In another embodiment, the bioactive compound is encased within the hollow portion of individualized carbon nanohorns according to the invention. In that respect, carbon nanohorns are advantageous over carbon nanotubes because the inside cavity is bigger that that of nanotubes. Therefore, carbon nanohorn intrinsically have a higher loading capacity than carbon nanotubes. Specifically, nanohorns have an average inner tubular diameter of 2-5 nm, while carbon nanotubes have about 1,5 nm inner diameter.

### Functionalized nanohorns

In another embodiment, the nanohorns may be functionalized to allow attachment of plethora of bio-molecules to the surface. In this embodiment, "functionalized" nanohorns refer to nanohorns having their surface modified to allow for the directed delivery and/or controlled release of the nanohorns bioactive compound's load.

The surface of nanohorns may be functionalized using well-known chemical methods, as described herein.

For example, directed delivery of the nanohorns can be achieved by attaching antibodies or other high affinity ligands to a surface of the nanohorns. Such molecules can be linked by covalent bonds or non-covalent forces.

Controlled release of the bioactive compound can be achieved by attaching the bioactive compound to the functionalized surface of the nanohorns. Such attachment can be via a chemically labile bond, allowing for the release of the bioactive compound under specific conditions.

The functionalization of the nanohorns surface allows multiple molecular recognition units, such as antibodies directed against different cellular targets or antigens, to be added to the nanohorns. Such nanohorns have wide utility in various in-vivo applications.

### Bioactive compounds

The individualized carbon nanohorns of the present invention can be used to deliver many different bioactive compounds or combinations of different bioactive compounds. The present invention includes the use of individualized carbon nanohorns to deliver at least one bioactive compound contained within the carbon nanohorns. For example, a combination of two or more bioactive agents may be loaded into the same carbon nanohorns for delivery.

Specific bioactive agents that may be used in this context include but are not limited to genetic material (e.g., DNA), RNA, oligonucleotides, peptides, proteins (e.g., enzymes), chemotherapeutics (anti-cancer drugs), antibiotics, antifungal agents, anesthetics, immunomodulators (e.g., interferon, cyclosporine), anti-inflammatory and other types of pain relieving drugs, autonomic drugs, cardiovascular-renal drugs, endocrine drugs, hematopoietic growth factors, blood lipid lowering drugs, AIDS drugs, modulators of smooth muscle function, antileptics, psychoactive drugs, and drugs that act on the peripheral nerves, adrenergic receptors, cholinergic receptors, the skeletal muscles, the cardiovascular system, smooth muscles, the blood circulatory system, synoptic sites, neuroeffector junctional sites, endocrine and hormone systems, the immunological system, the reproductive system, the skeletal system, autacoid systems, the alimentary and excretory systems, the histamine system, and the central nervous system. Suitable agents may be selected from, for example, proteins, enzymes, hormones, polynucleotides, nucleoproteins, polysaccharides, glycoproteins, lipoproteins, polypeptides, steroids, analgesics, local anesthetics, antibiotic agents, anti-inflammatory corticosteroids, ocular drugs and synthetic analogs of these species.

Examples of drugs which may be delivered by carbon nanohorns include, but are not limited to, prochlorperzine edisylate, ferrous sulfate, aminocaproic acid, mecamylamine hydrochloride, procainamide hydrochloride, amphetamine sulfate, methamphetamine hydrochloride, benzamphetamine hydrochloride, isoproterenol sulfate, phenmetrazine hydrochloride, bethanechol chloride, methacholine chloride, pilocarpine hydrochloride, atropine sulfate, scopolamine bromide, isopropamide iodide, tridihexethyl chloride, phenformin hydrochloride, methylphenidate hydrochloride, theophylline cholinate, cephalexin hydrochloride, diphenidol, meclizine hydrochloride, prochlorperazine maleate, phenoxybenzamine, thiethylperzine maleate, anisindone, diphenadione erythrityl tetranitrate, digoxin, isoflurophate, acetazolamide, methazolamide, bendroflumethiazide, chloropromaide, tolazamide, chlormadinone acetate, phenaglycodol, allopurinol, aluminum aspirin, methotrexate, acetyl sulfisoxazole, erythromycin, hydrocortisone, hydrocorticosterone acetate, cortisone acetate, dexamethasone and its derivatives such as betamethasone, triamcinolone, methyltestosterone, 17-S-estradiol, ethinyl estradiol, ethinyl estradiol 3-methyl ether, prednisolone, 17-alpha-hydroxyprogesterone acetate, 19-norprogesterone, norgestrel, norethindrone, norethisterone, norethiederone, progesterone, norgesterone, norethynodrel, aspirin, indomethacin, naproxen, fenoprofen, sulindac, indoprofen, nitroglycerin, isosorbide dinitrate, propranolol, timolol, atenolol, alprenolol, cimetidine, clonidine, imipramine, levodopa, chlorpromazine, methyldopa, dihydroxyphenylalanine, theophylline, calcium gluconate, ketoprofen, ibuprofen, cephalexin, erythromycin, haloperidol, zomepirac, ferrous lactate, vincamine, diazepam, phenoxybenzamine, diltiazem, milrinone, mandol, quanbenz, hydrochlorothiazide, ranitidine, flurbiprofen, fenufen, fluprofen, tolmetin, alclofenac, mefenamic, flufenamic, difuinal, nimodipine, nitrendipine, nisoldipine, nicardipine, felodipine, lidoflazine, tiapamil, gallopamil, amlodipine, mioflazine, lisinolpril, enalapril, enalaprilat captopril, ramipril, famotidine, nizatidine, sucralfate, etintidine, tetratolol, minoxidil, chlordiazepoxide, diazepam, amitriptyline, and imipramine. Further examples are proteins and peptides which include, but are not limited to, bone morphogenic proteins, insulin, colchicine, glucagon, thyroid stimulating hormone, parathyroid and pituitary hormones, calcitonin, renin, prolactin, corticotrophin, thyrotropic hormone, follicle stimulating hormone, chorionic gonadotropin, gonadotropin releasing hormone, bovine somatotropin, porcine somatotropin, oxytocin, vasopressin, GRF, somatostatin, lypressin, pancreozymin, luteinizing hormone, LHRH, LHRH agonists and antagonists, leuprolide, interferons such as interferon alpha-2a, interferon alpha-2b, and consensus interferon, interleukins, growth hormones such as human growth hormone and its derivatives such as methione-human growth hormone and des-phenylalanine human growth hormone, bovine growth hormone and porcine growth hormone, fertility inhibitors such as the prostaglandins, fertility promoters, growth factors such as insulin-like growth factor, coagulation factors, human pancreas hormone releasing factor, analogs and derivatives of these compounds, and pharmaceutically acceptable salts of these compounds, or their analogs or derivatives.

Other bioactive agents, which may be delivered by carbon nanohorns, include chemotherapeutic agents, such as carboplatin, cisplatin, paclitaxel, BCNU, vincristine, camptothecin, etopside, cytokines, ribozymes, interferons, oligonucleotides and oligonucleotide sequences that inhibit translation or transcription of tumor genes, functional derivatives of the foregoing, and generally known chemotherapeutic agents such as those described in U.S. Pat. No. 5,651,986 [ref 21].

### Pharmaceutical Compositions Comprising a Nanohorn Delivery System

A Nanohorn delivery system of the present invention can be incorporated into pharmaceutical compositions. Such compositions typically comprise the Nanohorn delivery system, including a bioactive compound, and a pharmaceutically acceptable carrier. A "pharmaceutically acceptable carrier" includes any and all solvents, dispersion media, coatings, antibacterial and antifungal agents, isotonic and absorption delaying agents, and the like, compatible with pharmaceutical administration (Gennaro, A. R. 2000. Remington: The science and practice of pharmacy. Lippincott, Williams & Wilkins, Philadelphia, Pa.

[ref 22]). Preferred examples of such carriers or diluents include, but are not limited to, water, saline, Finger's solutions, dextrose solution, and 5% human serum albumin. Liposomes and non-aqueous vehicles such as fixed oils may also be used. Except when a conventional media or agent is incompatible with an active compound, use of these compositions is contemplated. Supplementary active compounds can also be incorporated into the compositions.

A pharmaceutical composition of the nanohorn delivery system is formulated to be compatible with its intended route of administration, including intravenous, intradermal, subcutaneous, transdermal (i.e., topical), transmucosal, and rectal administration. Solutions or suspensions used for parenteral, intradermal, or subcutaneous application can include: a sterile diluent such as water for injection, saline solution, fixed oils, polyethylene glycols, glycerine, propylene glycol or other synthetic solvents; antibacterial agents such as benzyl alcohol or methyl parabens; antioxidants such as ascorbic acid or sodium bisulfite; chelating agents such as ethylenediaminetetraacetic acid (EDTA); buffers such as acetates, citrates or phosphates, and agents for the adjustment of tonicity such as sodium chloride or dextrose. The pH can be adjusted with acids or bases, such as hydrochloric acid or sodium hydroxide. The parenteral preparation can be enclosed in ampoules, disposable syringes or multiple dose vials made of glass or plastic.

### Kits

The invention also provides kits containing one or more of the following in a package or container: (1) a composition comprising a bioactive agent contained in a nanohorn delivery system of the present invention; (2) a pharmaceutically acceptable adjuvant or excipient; (3) a vehicle for administration, such as a syringe or catheter; (4) instructions for administration. Embodiments in which two or more of components (1) (4) are found in the same container are also contemplated.

When a kit is supplied, the different components of the composition may be packaged in separate containers and admixed immediately before use. Such packaging of the components separately may permit long-term storage without losing the active components' functions.

### Catalysis

Reduced carbon nanohorn solutions or individualized carbon nanohorns obtainable by the method of the invention may be used to prepare a catalyst supported on carbon nanohorns, preferably supported on individualized carbon nanohorns.

A recent report has shown that salts of carbon nanotubes can be used as reducing agents to reduce Au or Pd complexes to metal particles. (Lorençon et al., Applied Matter Interfaces, 1 (2009), 2104-2106 [ref 23]) .

For example, the method described by Lorençon et al. may be applied to decorating individualized carbon nanohorns with metal particles such as palladium.

Thus, in one aspect, the present invention provides a method for preparing a carbon nanohorn-supported catalyst. Accordingly, the method of the invention may further comprise a step c) of reacting the reduced carbon nanohorns obtained from step b) of the inventive method with a metal catalyst precursor to obtain the catalyst metal supported on the carbon nanohorns.

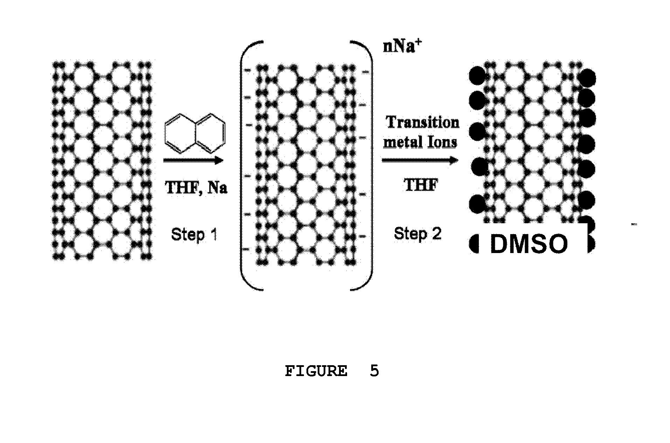

One embodiment of the method is illustrated in Figure 5. Thus, for example, a solution of reduced carbon nanohorns may be prepared according to the method of the invention described herein and above, and the negatively charged carbon nanohorns are made to react with a suitable metal catalyst precursor so that metal particles get bound to the surface of the individualized carbon nanohorns.

As the catalytic metal, there may be used various kinds of metals such as those conventional metals that have been hitherto known to have catalytic properties. Specific examples of the catalytic metal include Fe, Ni, Co, Pt, Mo, W, Mg and alloys thereof.

In certain embodiments, the catalyst metal precursor is selected from the group consisting of Pd(Ac)₂,Pd(Acac)₂ H₂PtCl₆, PtCl₂, PdCl₂, and a combination thereof.

The reacting step may be carried out in a suitable solvent, for example one that may be used in step b) of the dissolution method described herein.

In certain embodiments, the polar aprotic solvent used in the reacting step c) has a dielectric constant between 25 and 200.

In certain embodiments, the polar aprotic solvent used in the mixing step c) has a surface energy that matches that of graphitic surfaces.

For example, the polar aprotic solvent used in the step c) may be dimethylsulfoxide (DMSO), N-methyl-2-pyrrolidinonne (NMP), dimethyl formamide (DMF), acetone, acetonitrile, benzonitrile, 1,2-dichloro benzene, chloro benzene, sulfolane, cyclopentanone, cyclohexanone, N-formyl piperidine (NFP), vinyl pyrrolidone (NVP), 1,3-dimethyl-2-imidazolidinone (DMEU), bromobenzene or benzyl benzoate.

In certain exemplary embodiments, the polar aprotic solvent used in the step b) may be dimethylsulfoxide (DMSO), N-methyl-2-pyrrolidinonne (NMP), dimethyl formamide (DMF), acetone, acetonitrile, benzonitrile, 1,2-dichloro benzene or chloro benzene.

In another aspect, the present invention provides a catalyst supporting system having individualized carbon nanohorns and a metal catalyst supported on the surface of said carbon nanohorns. The catalyst supporting system may be prepared by the method described above.

The catalytic activity of the catalyst supporting system according to the invention may be tested using known methods in the art. For example, the person of ordinary skill in the art can refer to the teaching of Karousis et al. (J. Phys. Chem. C, 112 (2008), 13463-13469 [ref 24]). Thus, the catalytic activity of the catalyst supporting system may be assessed by determining their efficacy in hydrogenating olefinic substrates, or in effecting Stille and Suzuki coupling reactions. The person of ordinary skill in the art will know how to adapt the teachings of Karousis et al. to evaluate the catalytic activity of catalyst supporting systems according to the invention.

Palladium nanoparticles find industrial applications in both heterogeneous and homogeneous catalytic reactions. They have been successfully applied in coupling reactions for the formation of C-C bonds via the so-called Heck, Suzuki and Stille reactions. The Heck reaction involves the Pd-catalyzed carbon-carbon bond coupling reactions between aryl halides and olefins, the Stille reaction between aryl halides and organostannanes, while the Suzuki coupling reaction is a powerful synthetic method for preparing biaryls from arylboronates and aryl halides. However, most of the reported procedures require relatively long reaction times while it is difficult to recycle the catalyst. Therefore, the catalytic activity of Pd-nanoparticles immobilized onto the skeleton of solubilized CNHs toward the formation of C-C bonds via the Heck, Suzuki and Stille reactions is highlighted in terms of faster reaction times with high yields, while the catalyst can be recycled and reused again at least for three catalytic cycles with good catalytic activity. The application of carbon nanohorn-supported palladium catalyst to Suzuki, Stille and Heck reactions is illustrated below and in Example 5.

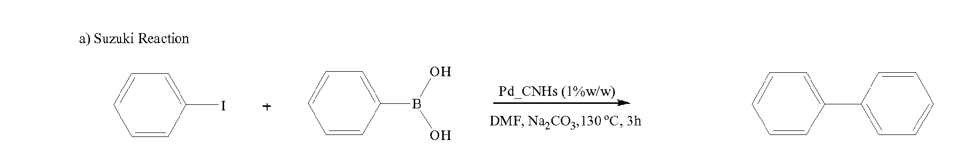

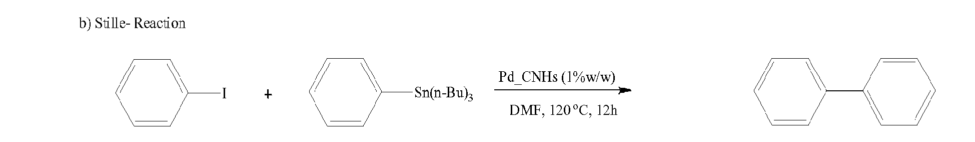

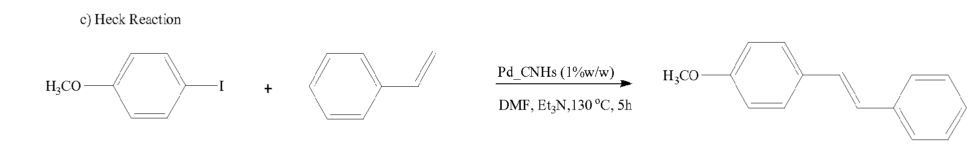

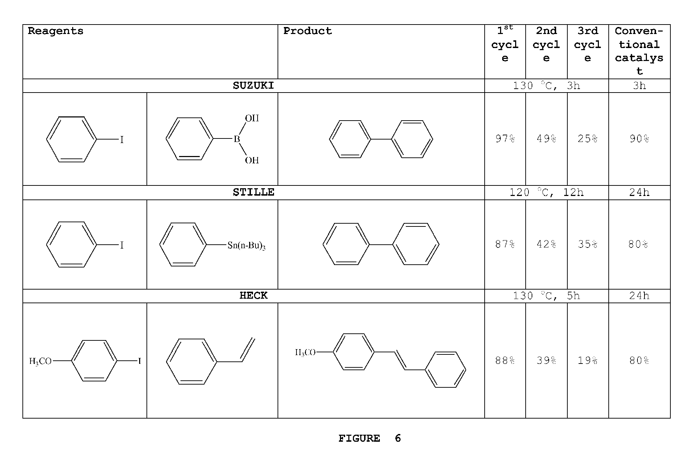

The comparative results are summarized in Figure 6, and show that catalysts of the invention perform better than conventional catalysts.

Of course, the catalysts according to the invention can find application to other Pd or Pt catalyzed chemical reactions, such as the reduction of double bonds.

One important advantage of the catalysts according to the invention is that they can be recovered and reused in further catalytic reactions. Conventional catalysts on the other hand cannot be recycled. Moreover, the amount of catalyst according to the invention used is two to three orders of magnitude less than the conventional catalysts for catalyzing with similar efficiency the reactions shown in Figure 6.

Another advantage of the catalysts according to the invention is that they can give rise to homogeneous-like catalysis due to the solubility/dispersibility of the catalytic material, as opposed to conventional catalysts with which heterogenous catalysis takes place.

### Gas storage

A major drawback in the utilization of hydrogen-based fuel cells for powering vehicles is the lack of an acceptable lightweight and safe hydrogen storage medium. Four conventional approaches to hydrogen storage are currently in use: (a) liquid hydrogen, (b) compressed gas, (c) cryo-adsorption, and (d) metal hydride storage systems. A brief description of these existing approaches is given below:
(a) The liquid hydrogen storage approach offers good solutions in terms of technology maturity and economy, for both mobile storage and large-volume storage systems with volumes ranging from 100 liters to 5000 m³. However, the containers (dewar) for storing the liquefied hydrogen are made of very expensive super-insulating materials.
(b) The compressed gas storage approach is usually applied in underground supply systems, similar to a network of natural gas pipelines. This is an economical and simple approach, but it is unsafe and not portable. Compressed hydrogen gas in a large steel tank could be an explosion hazard.
(c) The cryo-adsorbing storage approach involves moderate weight and volume. In this approach, hydrogen molecules are bound to the sorbent only by physical adsorption forces, and remain in the gaseous state. The adsorbing temperature is in the range of 60 to 100°K. Activated carbon is commonly used as the sorbent due to its large number of small pores serving as hydrogen storage sites. The efficiency of H₂ uptake is no more than 7 wt %, which is equivalent to about 20 kg H₂ per cubic meter of activated carbon. The disadvantages of this approach are related to the low capacity and the cryogenic temperature required, which makes it necessary to use expensive super-insulated containers. The following two papers are directly related to this subject: (1) R. Chahine and T. K. Bose, "Low-pressure adsorption storage of hydrogen," International J. of Hydrogen Energy, 19-2 (1994) 161-164 [ref 25]; (2) H. Hynek, et al., "Hydrogen storage by carbon sorption," International J. of Hydrogen Energy, 22-6 (1997) 601-610 [ref 26].
(d) The metal hydrides can store large quantities of H₂ via a chemical reaction of H+M -> M-H, wherein M is a selected metal element. Two major metal systems, i.e. Fe-Ti and Mg-Ni, have been applied as hydrogen storage media and have been put into use in automobiles driven by a H₂/O₂ fuel cell. The operating temperature is 40-70°C for the Ti-Fe system and 250-350°C for the Mg-Ni system. The hydrogen storage capacity is less than 5 wt % for Ni-Mg and 2 wt % for Fe-Ti, which corresponds to less than 70 kg H₂ per m³ of metals. Furthermore, metal hydride systems normally require 20-40 bar pressure to keep the hydrogen in equilibrium. This renders the container for the metal hydride too heavy and expensive, and limits the practical exploitation of these systems for portable electronic and mobility applications.

More recently, researchers have expressed great interest in storing H₂ in nanostructured carbon materials. For instance, Dillon, et al. ("Storage of hydrogen in single-walled carbon nanotubes," Nature, 386 (1997) 377-379 [ref 27]) reported that about 0.01 wt % of H₂ was absorbed by raw carbon nanotube material (which was estimated to contain approximately 5 wt % of the single wall nanotube, SWNT) at 130°K. Chambers, et al. ("Hydrogen storage in graphite nanofibers," J. Phys. Chem., 102 (22) (1998) 4253-4256 [ref 28]; U.S. Pat. No. 5,653,951 (Aug. 5, 1997) [ref 29] and U.S. Pat. No. 6,159,538 (Dec. 12, 2000) [ref 21]) claimed that tubular, platelet, and herringbone-like carbon nano-fibers (CNF) were capable of adsorbing in excess of 11, 45, and 67 weight % of H₂, respectively, at room temperature and at a pressure of 12 MPa. However, there has been no independent confirmation of these unusually high figures.

The above review indicates that the hydrogen storage technology still has four major barriers to overcome: (1) low H₂ storage capacity, (2) difficulty in storing and releasing H₂ (normally requiring a high T and/or high P), (3) high costs, and (4) potential explosion danger.

A need exists for the development of a new high-capacity medium that can safely store and release hydrogen at near ambient temperature conditions. If high pressures are involved in storing hydrogen, the conditions must still be safe.

Hence, an object of the present invention is to provide a material composition that has a higher hydrogen storage capacity. Such a composition can be used in a safe, reliable, and simple hydrogen storage and supply system that is capable of feeding hydrogen fuel to a power-generating device such as a hydrogen combustion engine or fuel cell. The theoretical maximum specific surface of graphene is 2640 cm²/g. Specific surface of pristine and oxidized carbon nanohorns (both as dahlia-shaped aggregates) has been reported as 290 cm²/g and 1045 cm²/g, respectively (Yang et al., J. Am. Chem. Soc., 129 (2007), 20-21 [ref 31]). Individualized carbon nanohorns would therefore be expected to have a much higher specific surface, which makes them very attractive material for hydrogen storage purposes. Accordingly, reduced carbon nanohorn solutions obtainable by the method of the invention may be used to prepare such a hydrogen storage system. In another aspect, there is provided the use of individualized carbon nanohorns according to the present invention to prepare such a hydrogen storage system.

In yet another aspect, there is provided a hydrogen storage device comprising:
(a) a vessel;
(b) a hydrogen storage bed disposed in said vessel, wherein the hydrogen storage bed comprises reduced carbon nanohorns or opened carbon nanohorns.

Opened carbon nanohorns can be prepared by adapting known methods. Specifically, a path from the outside to the nanospace of carbon nanohorns may be achieved by controlled thermal treatment in oxygen gas. Various molecules can enter inside carbon nanohorns, depending on the hole-size.The person skilled in the art may draw from the following articles for examples of applicable methods: (a) Murata, K., Kaneko, K., Kanoh, H., Kasuya, D., Takahashi, K., Kokai, F., Yudasaka, M. & Iijima, S.J. Phys. Chem. B 2002, 106, 12668-12669 [ref 39];; (b) Ajima, K.; Yudasaka, M.; Suenaga, K.; Kasuya, D.; Azami, T.; Iijima, S., Adv. Mater. 2004, 16, 397-401 [ref 40]; (c) A. Hashimoto, H. Yorimitsu, K. Ajima, K. Suenaga, H. Isobe, J. Miyawaki, M. Yudasaka, S. Iijima, and E. Nakamura, Proc. Natl. Acad. Sci. USA 2004, 101, 8527-8530 [ref 41].

In certain embodiments, the storage system may also contain at least one metal capable of dissociatively absorbing hydrogen. For example, the metal may be selected from the group consisting of Pd, Pt, Ni, La, and Mg.

In certain embodiments, the hydrogen storage bed is in the form of an aerogel. In that regards, the reader can refer to the teachings of WO 2009/101271 [ref 32], the entire contents of which are hereby incorporated by reference.

Thus, in certain embodiments, the process according to the invention further comprises:
c) a step of freezing the solution obtaining in step b); and
d) a step of subliming the aprotic solvent to form an aerogel of individualized carbon nanohorns.

In certain other embodiments, there is provided an aerogel obtainable by the process described above.

The person of ordinary skill in the art will know how to adapt the teachings of WO 2009/101271 [ref 32] to the preparation of aearogels of individualized carbon nanohorns according to the present invention.

### Photovoltaic cells

Photovoltaic cells convert sunlight directly into electricity by the interaction of photons and electrons within a photoconducting material. To create a photovoltaic cell a photoconducting material, commonly silicon, is joined by electrical contacts to form a junction. Presently, most silicon-based photovoltaic cells are silicon p-n junction devices. Photons striking the cell cause the mismatched electrons to be dislodged creating a current as they move across the junction. A grid of these electrical contacts creates an array of cells from which the current is gathered. The DC current produced in the cell depends on the materials involved and the energy and intensity of the radiation incident on the cell.

Photovoltaic cells have been available for a number of years and it has been predicted that the use of photovoltaics will continue to increase for years to come. The major obstacles to photovoltaic use throughout the world are cell efficiency and cell cost. Presently, the cost per watt for most photovoltaic cells is not low enough for these cells to be competitive with other energy sources. Currently, single crystal silicon is the photovoltaic material of choice.

Amorphous silicon is also used because it is less expensive; unfortunately it is also less efficient than single crystal silicon. Gallium arsenide cells are among the most efficient cells presently available, but they are quite expensive. Thus, a need exists for a photovoltaic cell that is both cost and energy efficient.

Carbon nanohorns may find applications in photovoltaic cell devices. Specifically, there have been reports on the use of pristine carbon nanohorns for conversion of solar energy. For example, the following may be mentioned:
- Pagona et al., Chem. Eur. J., 13 (2007) 7600-7607 [ref 33]
- Rotas et al., J. Am. Chem. Soc., 130 (2008) 4725-4731 [ref 34]
- Pagona et al., J. Phys. Chem. C, 112 (2008), 15735-15741 [ref 35]
- Pagona et al., Adv. Fucnt. Mat., 17 (2007), 1705-1711 [ref 36]

One advantage of carbone nanohorns is their purity: they can be prepared in high quantities without metal catalysts. Therefore, pristine carbon nanohorns can be provided free of metal contents. This is an important advantage over carbon nanotubes, the synthesis of which requires the use of a metal catalyst.

Thus, reduced carbon nanohorn solutions obtainable by the method of the invention may be used to prepare a photovoltaic cell device.

Thus in another aspect of the invention, there is provided porphyrin-grafted individualized carbon nanohorns.

Such grafted carbon nanohorns may be prepared by reacting the reduced (negatively charged) carbon nanohorns obtained in step b) of the process according to the invention with a properly derivatized porphyrin moiety such as the one shown below. 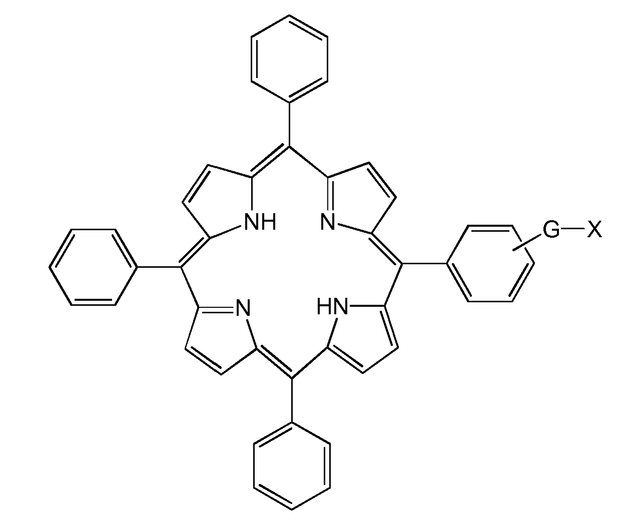 or 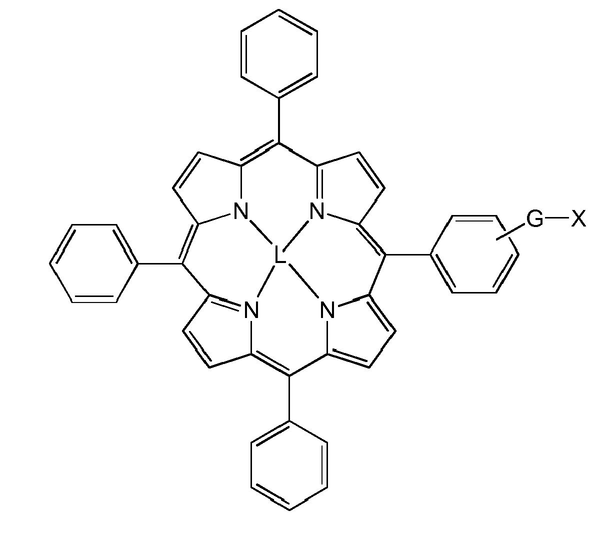 wherein
G represents a C₁₋₁₂alkyl group;
X represents a halogen atom; and
L represents a metal ion.
L may be any metal ion suitable to chelate a porphyrin moiety. According to Advanced inorganic chemistry, 5th edition, P. 354, 1988 Cotton and Wilkinson ([ref 42]), almost every metal in the Periodic Table can be coordinated to a porphyrin.

In certain exemplary embodiments, L may represent a transition metal. Suitable transitional metals of the presently disclosed subject matter include any of the 30 metals in the 3d, 4d and 5d transition metal series of the Periodic Table of the Elements, including the 3d series that includes Sc, Ti, V, Cr, Mn, Fe, Co, Ni, Cu, and Zn; the 4d series that includes Y, Zr, Nb, Mo, Tc, Ru, Rh, Pd, Ag and Cd; and the 5d series that includes Lu, Hf, Ta, W, Re, Os, Ir, Pt, Au and Hg.

In certain exemplary embodiments, L may be Zn, Fe, Ni, Co, Mn, Ru, or Rh.

In certain embodiments, the -G-X group is in para position on the phenyl radical.

In certain embodiments, the negatively charged carbon nanohorn can be quenched by the halo-derivatized porphyrin thus resulting in the anchoring of the photoactive porphyrin unit onto the framework of carbon nanohorn.

The same methodology can be also applied with metalloporphyrins as well as with other photoactive and/or electroactive moieties including phthalocyanins, corroles, chlorins, pyrenes, metallocenes, tetrathiafulvalens, extended tetrathiafulvalenes and perylenes.

Thus in another aspect of the invention, there is provided photoactive and/or electroactive moiety-grafted individualized carbon nanohorns.

Such grafted carbon nanohorns may be prepared by reacting the reduced (negatively charged) carbon nanohorns obtained in step b) of the process according to the invention with a properly derivatized porphyrin photoactive and/or electroactive moiety such as phthalocyanins, corroles, chlorins, pyrenes, metallocenes, tetrathiafulvalens, extended tetrathiafulvalenes and perylenes bearing a -G-X group, wherein G and X are as defined above.

Such a construct provides for a donor-acceptor nanosystem, where the carbon nanohorns act as an electron acceptor. Thus, this CNH-porphyrin construct allows for photoinduced electron and energy transfer to occur. As such, porphyrin-grafted individualized carbon nanohorns are suitable components for photovoltaic cells.

In yet another aspect of the invention, there is provided a photovoltaic cell comprising porphyrin-grafted individualized carbon nanohorns. In certain embodiments, the cell may comprise a first transparent electrode, a second electrode, and a photoactive layer positioned between said first and second electrodes comprising the porphyrin-grafted individualized carbon nanohorns.

For example, the electrode material can be any of platinum, rhodium, metallic ruthenium and ruthenium oxide. Further, conductive materials, such as tin oxide, tin oxide doped with Sb, F or P, indium oxide doped with Sn and/or F and antimony oxide, having their surfaces overlaid with the above electrode materials by plating or vapor deposition can also be used as the electrode layer. Still further, common electrodes, such as carbon electrode, can be used for constituting the electrode layer. In certain embodiments, the first electrode is an indium tin oxide electrode, wherein said electrode is coated on a glass or plastic substrate. In certain embodiments, the second electrode comprises aluminum, copper, silver and/or gold.

There is also provided a photo-sensitive electric resistor comprising porphyrin-grafted individualized carbon nanohorns.

In another aspect, there is provided an organic light emitting device comprising porphyrin-grafted individualized carbon nanohorns.

In another aspect, there is provided a method for producing a photovoltaic cell, including the steps of: a) providing a first transparent electrode and a second electrode; and b) positioning porphyrin-grafted individualized carbon nanohorns between said first and second electrodes.

The method described in the present document solves the current major problems that hamper the research developments in the field of carbon nanohorns, in particular individualized carbon nanohorns: the lack of samples and difficulties in applications.

The inventors of the present invention are the very first investigators to develop a carbon nanohorn dissolution method. From an industrial point of view, clearly the possibility to obtain carbon nanohorn solutions is an important element in the nanotechnologies and biomedical industries, since it is a crucial element for pushing technical progress forward in this field.

In certain embodiments, the present inventors successfully obtained for the first time the spontaneous dissolution of individualized carbon nanohorns in a variety of solvents. As such, this discovery opens up two promising ways in the field of carbon nanohorns: the availability of carbon nanohorn solutions opens broad perspectives for the functionalization of nanohorns (solution phase chemistry), and therefore for the biomedical industry (possibility to functionalize carbon nanohorns with bioactive agents for drug delivery applications). The availability of individualized carbon nanohorns in large scale also opens up new opportunities in the field of catalysis (individualized carbon nanohorns provide an adapted support of metal catalysts, and allow for enhanced specific area as compared to the aggregate forms which were available so far).

This discovery goes against the preconceived notion of the person skilled in the art according to which it was not possible to separate carbon nanohorn aggregates into individualized carbon nanohorns (See Azami et al., ref [12]). This technical prejudice was later confirmed by Utsumi et al., whose research findings suggested that carbon nanohorns, in their naturally occurring aggregate form, were linked together not only through van der Waals force, but also by chemical bonding (J. Phys. Chem. Lett. C, 111 (2007) 5572-5575 [ref 37]). Based on these observations, there was no reasonable expectation of success that carbon nanohorn aggregates could be dissolved and separated into individual carbon nanohorns by a process involving a metal alkali reduction method.

Yet, the inventors discovered that such aggregates could readily be placed into solution in a variety of solvents. In fact, unexpectedly, carbon nanohorn turned out to exhibit a much higher solubility in DMSO (35 mg/ml) than carbon nanotubes (on the order of 1 mg/ml). Hence, carbon nanohorns are about 30 fold more soluble in DMSO than carbon nanotubes.

One important aspect of the method of the present application partly resides in trying to dissolve carbon nanohorn alkali salts in polar solvents. This had never been considered, or considered as viable, over the last ten years of experimental research on carbon nanohorns.

Thus, the method of the present invention very advantageously leads to the first (to our knowledge) true solutions of isolated carbon nanohorns.

These solutions have an extraordinary potential with respect to the intense research efforts on carbon nanohorns that are ongoing worldwide since their discovery in 1999.

As the person skilled in the art will see upon reading the present description, one of the main advantages of the present invention is the simple implementation of the method, as well as its capacity to supply unlimited quantities of reduced carbon nanohorns. Such carbon nanohorns further have the particularity that they can be obtained in a charged form. Thus, these carbon nanohorns repel each other and cannot aggregate. They are thus stable in a solution according to the method of the invention.

Several advantages of using carbon nanohorns may be mentionned :
- Their synthesis requires no metal catalysts (as opposed to carbon nanotubes). Therefore, carbon nanorhorns have intrinsically a higher degree of purity than their nanotube counterparts.
- Their toxicity is lower than that of carbon nanotubes. This is in part due to the fact that their synthesis is metal-free (no trace metal catalyst). In addition, recent toxicology reports have shown that most of the toxicity first associated with carbon nanotubes was in fact linked to their metal content. Furthermore, in the case of multiwall carbon nanotubes, suspicion of toxicity arises from their shape and dimension (length from microns to 100s of microns, diameter of 10s to 100s of nanometers), quite similar to some forms of asbestos. The dimensions of carbon nanohorns are extremely different (length of ca 20 to 40 nm and diameter of 2 to 5 nm) / Hence, they have no asbestos-like dimensions or shape. In fact, Miyawaki et al. have confirmed that carbon nanohorns have low toxicity (ACS Nano, 2008, 2, 213-226 [ref 38]).

- Carbon nanohorns are likely to be a better drug delivery vehicle as compared to carbon nanotubes, because their size : a) no need to cut the particles, unlike carbon nanotubes), and b) NTCs' diameter is about 1,4 nm as opposed to carbon nanohorn (2-4 nm diameter). CNHs therfore have an intrinsincally higher loading capacity.
- CNHs are about 30 times more soluble in DMSO than NTCs
- CNHs can be dissolved in a greater variety of solvents as compared to carbon nanotubes (CNTs)

Other advantages will readily appear to the person skilled in the art upon reading the examples that follow, as illustrated by the appended Figures given for illustrative purposes.

### Brief description of the Figures

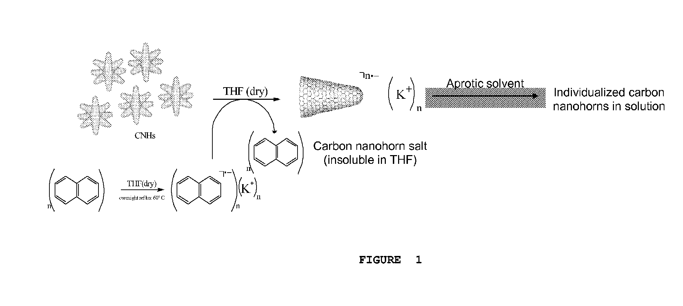

- Figure 1 schematically illustrates one embodiment of the invention. In the illustrated example, carbon nanohorn aggregates are reduced by a potassium compound (for example a potassium naphthalene salt) in the presence of THF to lead to a nanohorn salt. The latter is isolated for example by filtration and is dissolved in a polar aprotic solvent such as DMSO to form a carbon nanohorn solution, where the carbon nanohorns are individualized.

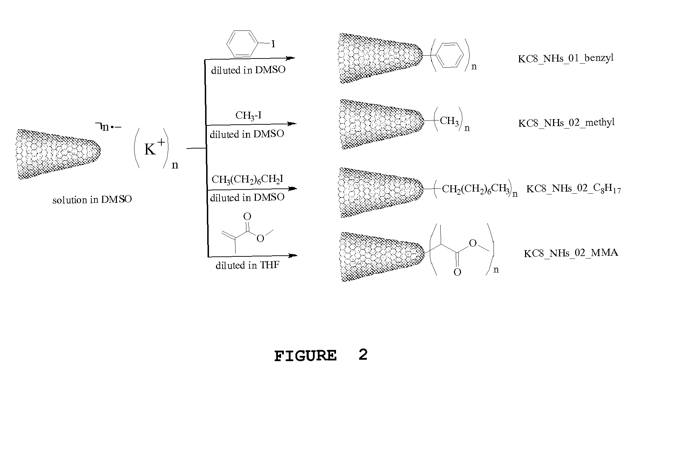

- Figure 2 shows possible synthetic applications of the dissolution process of the invention, in terms of functionalizing individual carborn nanohorns by way of solution phase chemistry.

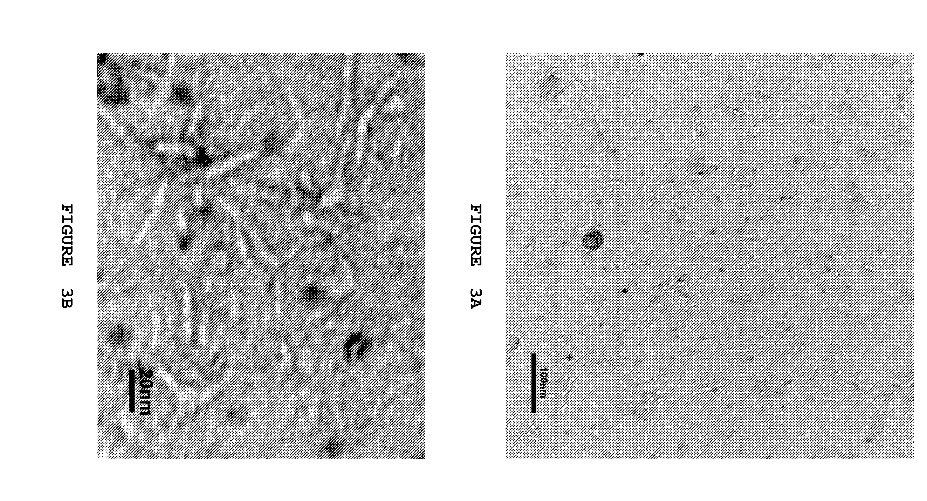

- Figure 3 shows TEM images of reduced carbon nanohorns obtained according to Example 2. Figure 3A: x 150 000 magnification. Figure 3B: x 300 000 magnification.

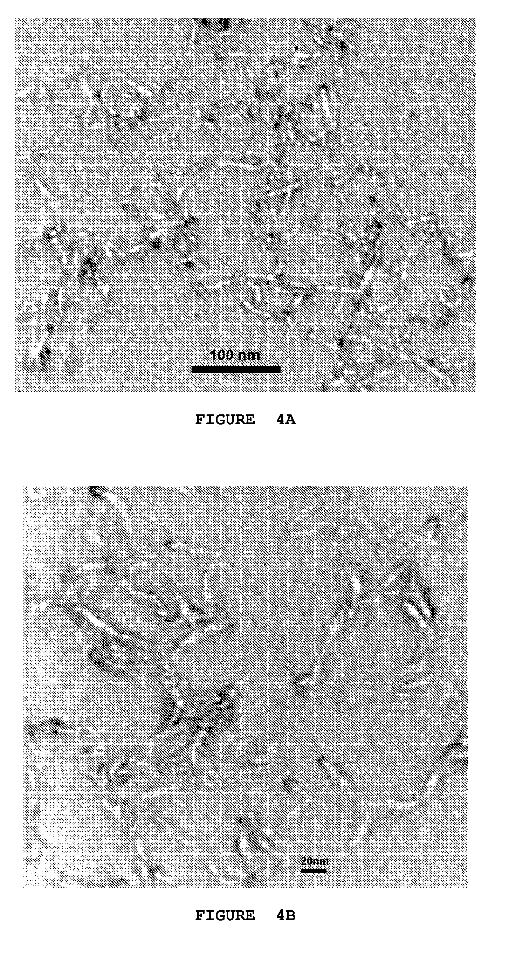

- Figure 4 shows TEM images of benzyl-functionalized reduced carbon nanohorns obtained according to Example 3.1. Figure 4A: x 150 000 magnification. Figure 4B: x 300 000 magnification.
- Figure 5 schematically illustrates a process of embedding transition metals on the surface of carbon nanohorns.
- Figure 6 provides comparative results of three types of catalytic reactions (Suzuki, Stille and Heck coupling) carried out with a carbon nanohorn-supported catalyst according to the invention, as compared to a conventional catalyst (See Example 5).

### Examples

Unless otherwise stated, all the experiments are carried out under inert atmosphere, for example under argon or nitrogen atmosphere. In particular, manipulations are performed in a glove box under a dried argon atmosphere (O₂ content < 10ppm, H₂O content < 10ppm). The pristine carbon nanohorns and the chemicals were introduced inside the glovebox after drying in high vacuum and degassed, respectively.

### Example 1 - Preparation of Potassium Naphthalenide

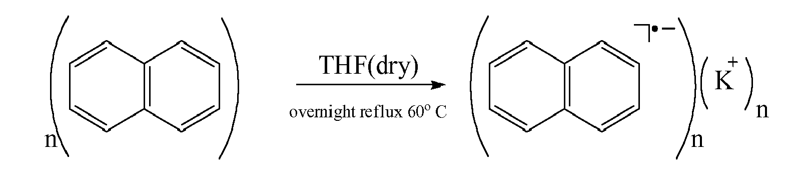

### 1st solution:

Potassium naphthalenide was prepared by adding 0.040gr (excess) of Potassium chips to a solution of 0.0668gr of submitted naphthalene to 140mL of dry THF under inert atmosphere. The mixture was refluxed overnight. Then, the mixture was filtrated to remove the excess of potassium.

The weight of the potassium naphthalanide solution salt (dark green solution) was 123.249gr (d_{THF}= 0.8892) and from that we can calculate the concentration of **[K⁺] to be 3.75mM.**

### 2nd solution:

The above experimental procedure was followed for the preparation of a second potassium naphthalenide solution (K: 0.100gr, naphthalene: 0.1336gr, THF: 150mL). The weight of the new potassium naphthalanide solution salt was 123.653gr (d_{THF}= 0.8892) and from that we can calculate the concentration of **[K⁺] to be 7.5mM.**

### Example 2 - Preparation of reduced Carbon Nanohorns (r-CNHs)

### Figure 1

### 1st solution: KC₈_NHs_01

The 1s^{t} solution of Potassium Naphthalenide ([K⁺] = 3.75mM) in THF was poured over CNHs (48mg) and stirred overnight at room temperature under inert atmosphere. The mixture was filtered over a nylon membrane (pore size 0.22µm) and washed repeatedly with distilled THF until it remained colorless. The residual solid was dried in vacuum for 30 min and collected from the membrane to obtain 76mg of reduced CNHs. 59mg of r-CNHs were diluted in 59mL of distilled DMSO (1mg/mL). The solubilization of the reduced CNHs was spontaneous. The black solution was stirred overnight at room temperature in inert atmosphere. Then, the solution of reduced CNHs was centrifuged for 1h to speed: 4000rpm. There was hardly any precipitation of CNHs. The solution was poured into a flask and preserved into inert atmosphere.

### 2nd solution: KC₈_NHs_02

The 2^{nd} solution of Potassium Naphthalenide ([K⁺] = 7.5mM) in THF was poured over CNHs (100mg) and stirred overnight at room temperature under inert atmosphere. The work up of the new solution of r-CNHs was followed as previously described to obtain 125 mg of reduced CNHs which were spontaneously dissolved into 125mL of distilled DMSO (1mg/mL) and stirred overnight under inert atmosphere. After centrifugation (1h/speed: 4000rpm), the solution was separated into 3 flasks and preserved into inert atmosphere.

### Example 3 - Covalent Functionalization of reduced Carbon

### Nanohorns (r-CNHs)

### Figure 2

### 1. Preparation of CNHs-benzyl product (KC₈_NHs_01_benzyl)

The DMSO solution of r-CNHs (KC₈_NHs_01) was treated with iodobenzene to obtain benzyl-CNHs as follows: Iodobenzene (300µL) diluted in 1mL DMSO was added to the DMSO solution of r-CNHs under inert atmosphere. The reaction mixture was stirred for more than 48h at room temperature. There was no precipitation or suspension created after the functionalization of r-CNHs. The DMSO solution was frozen in the refrigerator overnight. Upon thawing, the CNHs were precipitated. The suspension was filtrated in nylon membrane (pore size 0.2µm) and washed with DMSO and methanol. The residual solid was washed with distilled water to remove the KI and then washed with methanol and CH₂Cl₂ The residual solid was dried in vacuum at room temperature and then was lyophilized over night to obtain 19.5mg of functionalized CNHs.

### 2. Preparation of CNHs-methyl product (KC_{B}_NHs_02_methyl)

The first part of DMSO solution of r-CNHs (KC₈_NHs_02) was treated with iodomethane to obtain methyl-CNHs as follows: Iodomethane (100µL) diluted in 1mL DMSO was added to the DMSO solution of r-CNHs under inert atmosphere. The reaction mixture was stirred for more than 48h at room temperature. The suspension was filtrated in nylon membrane (pore size 0.2µm) and washed with DMSO and methanol. The residual solid was washed with distilled water to remove the KI and then washed with methanol and CH₂Cl₂. The residual solid was dried in vacuum at room temperature and then was lyophilized over night to obtain 26 mg of functionalized CNHs.

### 3. Preparation of CNHs-C₈H₁₇ product (KC₈_NHs_02_C₈H₁₇)

The second part of DMSO solution of r-CNHs (KC₈_NHs_02) was treated with iodooctane to obtain C₈H₁₇-CNHs as follows: Iodooctane (200µL) diluted in 1mL DMSO was added to the DMSO solution of r-CNHs under inert atmosphere. The reaction mixture was stirred for more than 48h at room temperature. The suspension was filtrated in nylon membrane (pore size 0.2µm) and washed with DMSO and methanol. The residual solid was washed with distilled water to remove the KI salt and then washed with methanol and CH₂Cl_{2.} The residual solid was dried in vacuum at room temperature and then was lyophilized over night to obtain 17.6 mg of functionalized CNHs.

### 4. Preparation of CNHs-PMMA product (KC₈_NHs_02_MMA)

The last part of DMSO solution of r-CNHs (KC₈_NHs_02) was treated with methyl methacrylate to obtain PMMA-CNHs as follows: Methyl methacrylate (300µL) diluted in 10mL THF was added drop wised to the DMSO solution of r-CNHs under inert atmosphere. The reaction mixture was stirred for more than 48h at room temperature. After the end of the reaction, 10 mL of methanol was added to the mixture. There was no precipitation or suspension created after the functionalization of r-CNHs, so we solidified the solution as we did previously with the KC₈_NHs_01_benzyl case. The suspension was filtrated in nylon membrane (pore size 0.2µm) and washed with DMSO, methanol and finally with CH₂Cl_{2.} The residual solid was dried in vacuum at room temperature and then was lyophilized overnight to obtain 35.1mg of functionalized CNHs.

### 5. Preparation of oxidized CNHs for REFERENCE use.

4.1mgr of reduced CNHs were diluted in 5mL of DMSO and then were bubbled overnight with air to oxidize the CNHs. The suspension was filtrated in nylon membrane (pore size 0.2µm) and washed methanol and CH₂Cl_{2.} The residual solid was dried in vacuum at room temperature and then was lyophilized.

### Example 4 - Preparation of nanohorn-supported palladium catalyst

40 ml of DMSO were poured over 40 mg of CNH salt and left stirring overnight. A mild centrifugation (2900 g, 1 hr) was performed to remove the (small fraction of) undissolved material. 65 mgs of Pd(Ac)2 (40 % excess) were added to the solution. After 7 minutes, the product (Pd nanoparticles supported over CNHs) was filtered on a PVDF membrane (0.45 micron pore size) and rinsed with DMSO.

### Example 5 - Application of nanorhon-supported palladium catalyst to Suzuki, Stille and Heck coupling

### a) Suzuki coupling

### CNH catalyst:

5 mg of nanoPd-CNHs (1% w/w Pd on CNHs) were dispersed in DMF (6 ml) and 1-iodobenzene (0.20 mmole), phenylboronic acid (0.24 mmole) and sodium carbonate (0.40 mmole) were added. The resulting mixture was stirred at 110 °C for 3 hours. After cooling, the reaction mixture was filtered through a 0.1 µm PTFE membrane filter. The nanoPd-CNHs catalyst was recovered and re-used again, after sufficient washing to remove organic impurities, in two more catalytic cycles.

The filtrate was poured into 50 ml water and was then extracted with ethyl acetate (30 ml) three times. The combined organic extracts were dried over anhydrous sodium sulphate and evaporated under reduced pressure. The product of the Suzuki reaction, namely biphenyl was obtained as verified upon ¹H NMR Spectroscopy.

### Conventional catalyst:

The palladium catalyzed carbon-carbon coupling reactions of aryl halides and boronic acid have already been described.

### [ref 43-48]

The conventional catalyst object of Figure 6 is Pd(PPh₃)₄ - palladium tetrakis triphenylphosphine. The results (% yield) listed in Figure 6 have been reported in Tetrahedron Lett. 1979, vol. 20, pp. 3437-3440 [ref 55].

### b) Stille coupling

### CNH catalyst:

3 mg of nanoPd-CNHs (1% w/w of Pd on CNHs) were dispersed in DMF (5 ml) and iodobenzene (0.1 mmole) and tributylphenyltin (0.12 mmole) were added. The mixture was heated under stirring at 110 °C for 12 hours. After cooling, the reaction mixture was filtered through a 0.1 µm PTFE membrane filter. In this way the nanoPd-CNHs catalyst was recovered and re-used again after sufficient washing to remove organic impurities, in two more catalytic cycles. The filtrate was poured into 50 ml water and was then extracted with ethyl acetate (30 ml) three times. The combined organic extracts were dried over anhydrous sodium sulphate and evaporated under reduced pressure. The product of the Stille reaction, namely biphenyl was obtained as verified upon ¹H NMR Spectroscopy.

### Conventional catalyst:

The palladium catalyzed carbon-carbon coupling reactions of aryl halides and organostannane have already been described.

### [ref 43-45, 49]

The conventional catalyst object of Figure 6 is Pd(PPh₃)₄ - palladium tetrakis triphenylphosphine. The results (% yield) listed in Figure 6 have been reported in Chem. Lett. 1977, p. 301-302 [ref 56].

### c) Suzuki coupling

### CNH catalyst:

3 mg of nanoPd-CNHs (1% w/w of Pd on CNHs) was suspended in DMF (5 ml) and 4-iodoanisole (0.1 mmole), the olefinic substrate (styrene, 0.2 mmole) were added. The resulting suspension was placed in a preheated oil bath at 130 °C and stirred for 5 hours. Then, the reaction mixture was cooled and filtered through a 0.1 µm PTFE membrane filter. In this way the catalyst was recovered and was amenable to be re-used after sufficient washing to remove organic impurities, for two more catalytic cycles. The filtrate was poured into 50 ml water and was then extracted with ethyl acetate (30 ml) three times. The combined organic extracts were dried over anhydrous sodium sulphate and evaporated under reduced pressure. The product of the Heck reaction namely 1-methoxy-4-styrylbenzene was characterized ¹H NMR Spectroscopy.

### Conventional catalyst:

The palladium catalyzed carbon-carbon coupling reactions of aromatic and vinylic systems have already been explored.

### [ref 43, 51-54]

The conventional catalyst object of Figure 6 is Pd(Cl₂) or Pd(OAc)₂ - palladium dichloride or palladium acetate. The results (% yield) listed in Figure 6 have been reported in Bull. Chem. Soc. Jpn. 1971, vol. 44, pp. 581-581 (single page) and J. Org. Chem. 1972, vol. 37, pp. 2320-2322 [ref 57 and 58, respectively].

### Discussion:

Iodobenzene and 4-iodoanisole were used as the substrates for the coupling reactions which were carried out at a constant 1% w/w Pd-nanoparticles onto CNHs. The Suzuki coupling reaction with phenyl boronate took place within only 3 hours under heating, for the Stille coupling reaction with n-tributyl phenyl stannane 12 hours were required, while for the Heck reaction with styrene the product was obtained within 5 hours. In all cases, the catalyst was recovered by filtration over a Teflon membrane (PTFE, 0.2 *µ*m pore size) and used again in the next catalytic cycle, after sufficient washing with DMF, methanol, diethyl ether, and subsequent dryness, showing good activity toward the formation of the coupling product for at least three catalytic cycles. Importantly, in a control experiment, when insoluble intact CNHs were used, no reaction took place, thus manifesting the importance of Pd-nanoparticles as well as the solubility of the Pd-nanoparticles immobilized onto solubilized CNHs in catalyzing the formation of C-C coupling bonds in the examined reactions. The good catalytic activity found for Pd-nanoparticles immobilized onto solubilized CNHs is thus rationalized in terms of high surface area of Pd-nanoparticles immobilized onto the surface of solubilized CNHs in semi-homogeneous catalytic reactions.

### List of references

[1] Schaffer, M. S. P., Windle, A. H., "Fabrication and Characterization of Carbon Nanotube/poly (vinyl alcohol) Composites", Adv. Mater., 11, pp 937-941 (1999)
[2] Ye, Y., Ahn, C. C., Witham, C., Fultz, B., Liu, J., Rinzler, A. G., Colbert, D., Smith, K. A., Smalley, R. E., "Hydrogen Absorption And Cohesive Energy Of Single-Walled Carbon Nanotubes", App. Phys. Lett., 74, pp 3072309 (1999)
[3] Liu, C., Fan, Y. Y., Liu, M., Gong, H. T., Cheng, H. M., Dresselhaus, M. S., "Hydrogen Storage In Single-Walled Carbon Nanotubes At Room Temperature", Science, 286, pp 1127-1129 (1999)
[4] Kong, J., Chapline, M. G., Dai, H., "Functionalized Carbon Nanotubes For Molecular Hydrogen Sensors", Adv. Mater. 13, 1384-1386 (2001)
[5] Aldissi, M.; Schmitz, B.; Lazaro, E.; Bhamidipati, M.; Dixon, B., "Conducting Polymers In Ultracapacitor Applications", 56th Annu. Tech. Conf.--Soc. Plast. Eng., (Vol. 2), pp 1197-1201 (1998)
[6] An, K. H.; Kim, W. S.; Park, Y. S.; Moon, J.-M.; Bae, D. J.; Lim, S. C.; Lee, Y. S.; Lee, Y. H. "Electrochemical Properties Of High-Power Supercapacitors Using Single-Walled Carbon Nanotube Electrodes", Adv. Funct. Mater. 11, pp 387-392 (2001)
[7] Yu, R., Chen, L., Liu, Q., Lin, J., Tan, K. -L., Ng, S. C., Chan, H. S. O., Xu, G.-Q.,Hor, T. S. A. "Platinum Deposition On Carbon Nanotubes Via Chemical Modification", Chem. Mater. 10, pp 718-722 (1998)
[8] Planeix, J. M.; Coustel, N.; Coq, B.; Brotons, V.; Kumbhar, P. S.; Dutartre, R.; Geneste, P.; Bernier, P.; Ajayan, P. M., "Application Of Carbon Nanotubes As Supports_in Heterogeneous Catalysis", J. Am. Chem. Soc. 116, pp 7935-7936 (1994)
(9] Tans, S. J., Verschueren, A. R. M., Dekker, C., "Room-Temperature Transistor Based On A Single Carbon Nanotube", Nature 393, pp 49-52 (1998)
[10] Bechtold, A.; Hadley, P.; Nakanishi, T.; Dekker, C., "Logic Circuits With Carbon Nanotube Transistors". Science 294 pp 1317-1320 (2001)
[11] Iijima et al., Chem. Phys. Lett., 309 (1999) 165-170
[12] Azami et al., J. Phys. Chem., (2008), 112, 1330-1334
[13] Zhang et al., J. Phys. Chem. C, 113, 11184-11186 (2009)
[14] C. Stein, J. Poulenard, L. Bonnetain, J. Golé, C.R. Acad. Sci. Paris 260, 4503 (1965)
[15] A. Herold in Chemical physics of intercalation, A.P. Legrand and S. Flandrois, Eds, NATO ASI Series, series B, Vol. 172, pp. 3-45 (1987)
[16] F. Béguin and R. Setton New ternary lamellar compounds of graphite, Carbon 13, 293- ) 295 (1975)
[17] WO 2005/073127
[18] WO 2009/087287
[19] U.S. patent 7,501,024
[20] Tagmatarchis et al., Small, 2(4), (2006), 490-494
[21] U.S. Patent 5,651,986
[22] Gennaro, A. R. 2000. Remington: The science and practice of pharmacy. Lippincott, Williams & Wilkins, Philadelphia, Pa.).
[23] Lorençon et al., Applied Matter Interfaces, 1 (2009), 2104-2106
[24] Karousis et al., J. Phys. Chem. C, 112 (2008), 13463-13469
[25] R. Chahine and T. K. Bose, "Low-pressure adsorption storage of hydrogen," International J. of Hydrogen Energy, 19-2 (1994) 161-164
[26] H. Hynek, et al., "Hydrogen storage by carbon sorption," International J. of Hydrogen Energy, 22-6 (1997) 601-610
[27] Dillon, et al., "Storage of hydrogen in single-walled carbon nanotubes," Nature, 386 (1997) 377-379
[28] Chambers, et al., "Hydrogen storage in graphite nanofibers," J. Phys. Chem., 102 (22) (1998) 4253-4256
[29] U.S. Patent 5,653,951
[30] U.S. Patent 6,159,538
[31] Yang et al., J. Am. Chem. Soc., 129 (2007), 20-21
[32] WO 2009/101271
[33] Pagona et al., Chem. Eur. J., 13 (2007) 7600-7607
[34] Rotas et al., J. Am. Chem. Soc., 130 (2008) 4725-4731
[35] Pagona et al., J. Phys. Chem. C, 112 (2008), 15735-15741
[36] Pagona et al., Adv. Fucnt. Mat., 17 (2007), 1705-1711
[37] Utsumi et al., J. Phys. Chem. Lett. C, 111 (2007) 5572-5575
[38] Miyawaki et al., ACS Nano, 2008, 2, 213-226
[39] Murata, K., Kaneko, K., Kanoh, H., Kasuya, D., Takahashi, K., Kokai, F., Yudasaka, M. & Iijima, S. J. Phys. Chem. B 2002, 106, 12668-12669
[40] Ajima, K.; Yudasaka, M.; Suenaga, K.; Kasuya, D.; Azami, T.; Iijima, S. "Material Storage Mechanism in Porous Nanocarbon", Adv. Mater. 2004, 16, 397-401
[41] A. Hashimoto, H. Yorimitsu, K. Ajima, K. Suenaga, H. Isobe, J. Miyawaki, M. Yudasaka, S. Iijima, and E. Nakamura, Proc. Natl. Acad. Sci. USA, 2004, 101, 8527-8530
[42] Cotton and Wilkinson, Advanced inorganic chemistry, 5th edition, P. 354, 1988.
[43] D. Astruc, Inorg. Chem. 46, 1884 (2007).
[44] J. Garcia-Martinez, R. Lezutekong and R. Crooks, J. Am. Chem. Soc. 127, 5097 (2005).
[45] D. Albisson, R. Bedford, S. Lawrence and P. Scully, Chem. Commun. 2095 (1998).
[46] R. Narayanan and M. El-Sayed, Langmuir, 21, 2027 (2005).
[47] Miyaura, N.; Yanagi, T.; Suzuki, A. Synth. Commun., 11, 513 (1981)
[48] X. Cui, T. Qin, J.-R. Wang, L. Liu, Q.-X. Guo, Synthesis, 393 (2007).
[49] M. Dell'Anna, A. Lofu, P. Mastrorilli, V. Mucciante, C. Nobile, J. Organometallic Chem. 691, 131 (2006)
[50] J.-H. Li, Y. Liang, D.-P. Wang, W.-J. Liu, Y.-X. Xie, D.-L. Yin, J. Org. Chem., 70, 2832 (2005).
[51] X. Xie, J. Lu, B. Chen, J. Han, X. She and Xinfu Pan, Tetrahedron Lett. 45, 809 (2004).
[52] G. Ambulgekar, B. Bhanage and S. Samant, Tetrahedron Lett. 46, 2483 (2005).
[53] I. Pryjomska-Raya, A. Gnieweka, A. Trzeciaka, J. Ziolkowskia and W. Tylus, Topics in Catalysis, 40, 173 (2006).
[54] B. H. Lipshutz, B. R. Taft, Org. Lett., 10, 1329 (2008) .
[55] Tetrahedron Lett. 1979, vol. 20, pp. 3437-3440
[56] Chem. Lett. 1977, p. 301-302
[57] Bull. Chem. Soc. Jpn. 1971, vol. 44, pp. 581-581 (single page)
[58] J. Org. Chem. 1972, vol. 37, pp. 2320-2322

## Claims

1. A method for solubilizing carbon nanohorns, **characterized in that** it comprises the following steps, which are carried out under inert atmosphere:
a) reduction of pristine carbon nanohorns by an alkali metal to lead to a carbon nanohorn alkali salt; and
b) exposure of the carbon nanohorn alkali salt to a polar aprotic solvent to lead to a solution of reduced carbon nanohorns.

2. A method according to claim 1, wherein the carbon nanohorn alkali salt is in the form of a binary compound of formula KC₈.

3. A method according to any one of claims 1 to 2, wherein the step of reduction a) is carried out in the presence of a nucleophilic solvent that is an aprotic solvent whose structure contains at least one oxygen atom.

4. A method according to any one of claims 1 to 3, wherein the reduction step a) comprises the addition of a polyaryl alkali salt of formula A⁺B⁻ to pristine carbon nanohorns under inert atmosphere, wherein:
A⁺ represents a cation of an alkali ion, and
B⁻ represents an anion of a polyaromatic compound.

5. A method according to claim 4, wherein the polyaromatic compound is selected from naphthalene, benzophenone, fluorenone, benzoquinone or anthraquinone.

6. A method according to any one of claims 1 to 5, wherein the polar aprotic solvent is dimethylsulfoxide (DMSO), N-methyl-2-pyrrolidinonne (NMP), dimethyl formamide (DMF), acetone, acetonitrile, benzonitrile, 1,2-dichloro benzene, chloro benzene, sulfolane, cyclopentanone, cyclohexanone, N-formyl piperidine (NFP), vinyl pyrrolidone (NVP), 1,3-dimethyl-2-imidazolidinone (DMEU), bromobenzene or benzyl benzoate.

7. A method according to any one of claims 1 to 6, further comprising:
c) a step of freezing the solution obtaining in step b); and
d) a step of subliming the aprotic solvent to form an aerogel of individualized carbon nanohorns.

8. An aerogel of individualized carbon nanohorns obtainable by a method according to claim 7.

9. A solution of reduced carbon nanohorns obtainable by a method according to any one of claims 1 to 6.

10. A method according to any one of claims 1 to 6, further comprising a step of evaporating the polar aprotic solvent.

11. Individualized carbon nanohorns obtainable by a method according to claim 10.

12. A method according to claim 1, further comprising a step of reacting the reduced carbon nanohorns obtained in step b) with a compound of formula R-X, wherein X represents a leaving group, and R represents a C₁₋₁₀alkyl, C₂₋₁₀alkenyl, C₂-₁₀alkynyl, C₁₋₁₀alkyl, C₁₋₁₀alkylcarbonyl, C₆₋₁₀arylcarbonyl or C₁₋₁₀heteroarylcarbonyl moiety, each of the foregoing moieties being optionally substituted.

13. Functionalized individualized carbon nanohorns obtainable by a method according to claim 12.

14. Use of carbon nanohorns according to claim 11 or 13 as drug delivery system.

15. Use of carbon nanohorns according to claim 11 or 13 for the preparation of a carbon nanohorn-supported catalyst.

16. Use of carbon nanohorns according to claim 11 or 13 for the preparation of a hydrogen storage system.

17. Use of carbon nanohorns according to claim 11 or 13 for the preparation of a photovoltaic cell.
